(19)

Europäisches Patentamt

European Patent Office

Office européen des brevets

(11) **EP 4 198 552 A1**

(12) **EUROPEAN PATENT APPLICATION**

(43) Date of publication:
**21.06.2023 Bulletin 2023/25**

(21) Application number: **22197738.2**

(22) Date of filing: **26.09.2022**

(51) International Patent Classification (IPC):
**G01S 7/292** (2006.01)    **G01S 7/35** (2006.01)
**G01S 13/72** (2006.01)    **G01S 13/931** (2020.01)

(52) Cooperative Patent Classification (CPC):
**G01S 7/356; G01S 7/2921; G01S 13/726;
G01S 13/931**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2021 US 202117645112**

(71) Applicant: **Aptiv Technologies Limited
St. Michael (BB)**

(72) Inventors:
• **Gao, Boyi**
**Westfield, 46074 (US)**
• **Gianelli, Christopher D.**
**Michigan City, 46360 (US)**

(74) Representative: **Manitz Finsterwald
Patent- und Rechtsanwaltspartnerschaft mbB
Martin-Greif-Strasse 1
80336 München (DE)**

(54) **MOVEMENT COMPENSATION FOR MULTI-DIMENSIONAL RADAR SIGNAL PROCESSING**

(57) This document describes techniques, apparatuses, and systems for movement compensation for multi-dimensional radar signal processing. A radar system receives radar signals reflected off of an object, and a two-dimension representation of the reflections is generated in the frequency domain. The two-dimensional representation illustrates attributes of the radar signals with respect to a fast-time dimension and a slow-time dimension. An energy peak within this two-dimensional representation is determined. Data associated with the energy peak, including a range and range rate, are determined from compensating the energy peak for movement of the object within a single frame. This compensation can include adjusting frequencies associated with the energy peak in the fast-time dimension and/or the slow-time dimension. The data associated with the energy peak is output to enable radar tracking with more accurate range and range rates measurements than can be output without performing movement compensation.

EP 4 198 552 A1

## Description

### BACKGROUND

Radar systems are commonly used in perception systems of autonomous vehicles to assist in driving operations. Typically, radar systems receive signals (i.e., returns) reflected off of objects in a field of view and process the return signals into useful information about position and/or range rate to enable the objects to be tracked. Due to complexities of radar signal processing, approximations are often used to simplify and speed up the computations, which can fail to account for certain environmental or object characteristics and introduce errors in a radar output. Advanced driver and/or assistance systems relying on inaccurate radar data may exhibit unsafe and uncomfortable driving behavior.

### SUMMARY

This document describes techniques, apparatuses, and systems for movement compensation for multi-dimensional radar signal processing. A radar system receives radar signals reflected off of an object, and a two-dimension representation of the reflections is generated in the frequency domain. The two-dimensional representation illustrates attributes of the radar signals with respect to a fast-time dimension and a slow-time dimension. An energy peak within this two-dimensional representation is determined. Data associated with the energy peak, including a range and a range rate, are determined from compensating the energy peak for movement of the object within a single frame. This compensation can include adjusting frequencies associated with the energy peak in the fast-time dimension and/or the slow-time dimension. The data associated with the energy peak is output to enable radar tracking with more accurate range and range rates measurements than can be output without performing movement compensation.

Aspects described below include movement compensation for multi-dimensional radar signal processing. A method includes receiving radar signals comprising at least one frame of multiple chirps reflected off of an object external to a radar system and generating a two-dimensional representation of the radar signals in the frequency domain, where the two-dimensional representation includes a fast-time dimension and a slow-time dimension. In aspects, data associated with an energy peak of the two-dimensional representation, including a range and a range rate, is determined by at least compensating a portion of the data associated with the energy peak for movement of the object within a single frame of the at least one frame. The data associated with the energy peak, including the compensated portion, may be output for enabling radar tracking of the object at the range and range rate included in the data.

Aspects are also described that include a system for performing the described method. For example, a system at least one processor and at least one computer readable storage media that, when executed by the at least one processor, cause the at least one processor to perform the above method.

This Summary introduces simplified concepts related to movement compensation for multi-dimensional radar signal processing further described in the Detailed Description and Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of movement compensation for multi-dimensional radar signal processing are described in this document with reference to the following figures. The same numbers are often used throughout the drawings to reference like features and components:

FIG. 1 illustrates an example environment for performing movement compensation for multi-dimensional radar signal processing;
FIG. 2 illustrates an example vehicle including a system configured to perform movement compensation for multi-dimensional radar signal processing;
FIG. 3 illustrates an example radar system including a system configured to perform movement compensation for multi-dimensional radar signal processing;
FIG. 4 illustrates an example method for movement compensation for multi-dimensional radar signal processing;
FIG. 5 illustrates a detailed example of compensating for movement in a two-dimensional signal processing for a radar system;
FIG. 6 illustrates example results of two-dimensional signal processing for a radar system without movement compensation; and
FIG. 7 illustrates example results of movement compensation for multi-dimensional radar signal processing.

## DETAILED DESCRIPTION

INTRODUCTION

A perception system may rely on a radar tracker to provide situational awareness and detect objects of interest in an environment of a vehicle. The radar system includes a multiple-input-multiple-output (MIMO) antenna array and a MIMO-integrated-circuit (MMIC), which obtains multiple chirps of radar returns reflecting from objects over multiple frames (of time). From radar data output by the MMIC, a radar processor can transform the radar data into the frequency domain through a Fourier Transform, for example, a two-dimensional Fast-Fourier Transform (FFT) or a Discrete Fourier Transform (DFT). In the frequency domain, the radar signals may be represented in terms of a fast-time dimension (e.g., samples collected over a single chirp) and a slow-time dimension (e.g., samples collected across multiple chirps). When the received signals are transformed into the frequency domain, the received energy from radar signal reflections may be better grouped to identify energy peaks within the two-dimensional FFT. Detections may be determined from an energy peak of the radar signals reflected off of an object in the field of view of the radar system. Detections may be indicative of data, such as range and range rates, determined through a set of linear equations; the data is associated with a radar-reflective portion of an object at a single moment in time.

A detection-based radar tracker can deduce object measurements (object position, size, orientation, velocity, and acceleration) based on detections to small parts of each object in the scene. Some detections (e.g., deemed to be noise) may be discarded to reduce the amount of radar data ultimately being processed. Detections may be discarded by applying thresholding and/or by applying non-maximal suppression of the energy attributed to the detections, for example by peak finding in frequency domain. This may increase tracking speed and cause tracks to objects to appear in a radar output with object measurements that are quickly deduced from the detections that remain. A periodic sequence of radar tracks, including object measurements, is output in response to grouping detections that can be attributed to a same object. Each of the radar tracks represents a distinct object from a set of objects that are observable from the detections. Each radar track has numerous fields for conveying object measurements of that track.

Due to the computational expense and non-linearity of determining data associated with detections, the set of linear equations used to determine range and range rate may overlook factors that contribute to errors in these calculations. For example, the linear equations used to analyze peaks found in a two-dimensional FFT may fail to account for the movement of an object within a single frame of radar signals. As a result, the radar tracks generated from the detections may be imprecise and cause inaccurate or incomplete driving tracks. That is, if the data (e.g., range and range rate) derived from detections is inaccurate, a detection-based radar tracker may produce inaccurate radar tracks that, when relied on to perform vehicle functions, may cause unsafe, uncomfortable, or erratic driving behaviors.

OVERVIEW

This document describes techniques, apparatuses, and systems for movement compensation for multi-dimensional radar signal processing. An example radar system receives radar signals, including multiple chirps over at least one frame, reflected off an object. The received radar signals are used to generate a two-dimensional representation (e.g., Range-Doppler plane) of the received radar signals in the frequency domain and organized with respect to a fast-time dimension and a slow-time dimension. The two-dimensional representation of the received radar signals may be searched for an energy peak (e.g., a point on the two-dimensional representation which meets certain criteria). For example, an energy peak may be determined at an area or region of radar signals which contain the greatest energy in the two-dimensional representation. Energy peaks may be determined using thresholding. To this effect, noise present in the radar signals may be filtered out through peak finding combined with thresholding.

Responsive to determining the energy peak in the two-dimensional representation, measurements derived from the data associated with the energy peak may be determined. For example, range and range rate may be determined though use of a set of linear equations relating a fast frequency in the fast-time dimension and a slow frequency in the slow-time dimension. The fast and slow frequencies are different. The data associated with the energy peak is compensated for the movement of a reflecting object during a single frame. The data may be compensated by adjusting the fast frequency in the fast-time dimension and/or adjusting the slow frequency in the slow-time dimension; this to account for the movement of the object within the single frame. In doing so, the linear algebra may be applied to the adjusted frequencies to determine a more accurate measurement (e.g., range and range rate) than if no movement compensation occurs. More accurate radar tracking is enabled without added cost or complexity. The detections or radar tracks derived from the detections may be output to an advanced driver-assistance system to detect and avoid objects. In this manner, the techniques, apparatuses, and systems described herein may provide safe, comfortable, and convenient operation of an autonomous vehicle.

EXAMPLE ENVIRONMENT

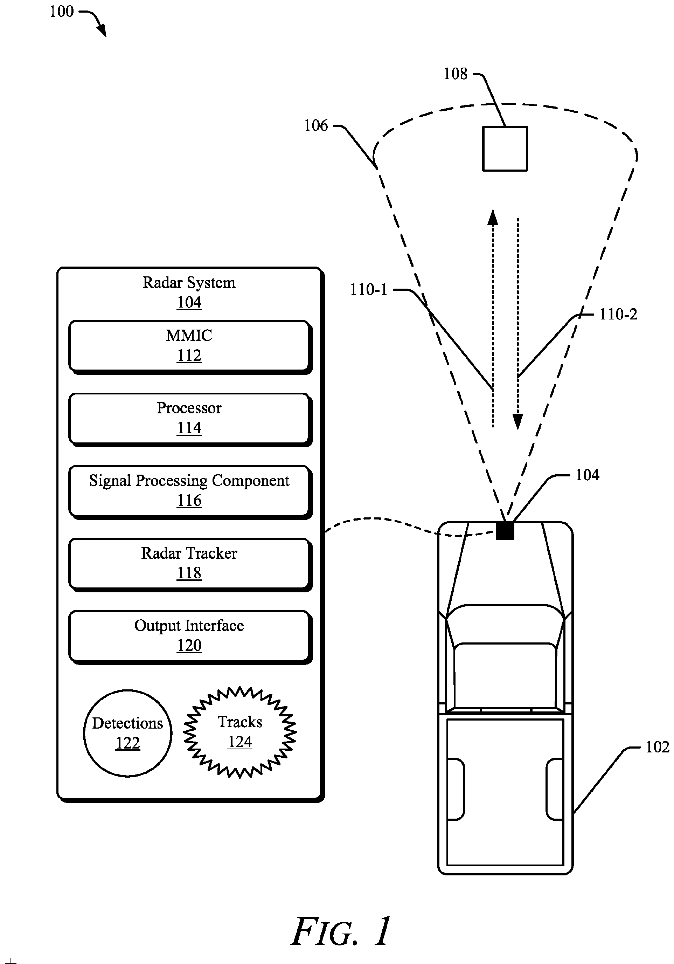

FIG. 1 illustrates an example environment 100 for movement compensation for multi-dimensional radar signal processing. In the depicted environment 100, a vehicle 102 travels on a roadway. Although illustrated as a passenger truck, the vehicle 102 can represent other types of motorized vehicles (e.g., a car, motorcycle, bus, tractor, semi-trailer truck), non-motorized vehicles (e.g., a bicycle), railed vehicles (e.g., a train), watercraft (e.g., a boat), aircraft (e.g., an airplane), spacecraft (e.g., satellite), and the like. The vehicle 102 relies on a perception system, including a radar system 104, for avoiding objects while driving among other objects that may appear in the environment 100.

The radar system 104 outputs radar data, including indications of objects detected in a field of view 106. For example, the radar data may alert advanced safety or autonomous driving systems of the vehicle 102 about objects (e.g., an object 108) that appear near the vehicle 102. The radar system 104 can be installed on, mounted to, or integrated with any part of the vehicle 102, such as in a front, back, top, bottom, or side portion of the vehicle 102, a bumper, a side mirror, part of a headlight and/or tail light, or at any other interior or exterior location of the vehicle 102 where object detection using radar is desired. The radar system 104 may include multiple radar devices or multiple radar systems that coordinate to provide the field-of-view 106.

The radar system 104 can include a combination of hardware components and software components executing thereon. For example, a computer-readable storage media (CRM) of the radar system 104 may store machine-executable instructions that, when executed by a processor, cause the radar system 104 to output information about objects detected in the field of view 106. One example combination of hardware and software components of the radar system 104 includes a MMIC 112, at least one processor 114, a signal processing component 116, a radar tracker 118, and an output interface 120.

With inclusion of the MMIC 112, the radar system 104 is shown as a MIMO radar system, however, the radar tracking techniques described herein are not necessarily limited only to MIMO radar systems and can be applied for radar tracking in other radar types of radar systems. For simplicity of the Drawings, an antenna is not shown, however, the MMIC 112 includes an interface to an appropriate antenna, such as a MIMO antenna array. During each frame of time, the MMIC 112 transmits radar signals 110-1 via the antenna to radiate objects in the field of view 106. The MMIC 112 receives radar returns 110-2 via the antenna as reflected versions of the radar signals 110-1 transmitted for that frame. The MMIC 112 transforms the radar returns 110-2 into a digital format enabling the radar system 104 to quickly establish tracks to objects in the field of view 106.

The processor 114, the signal processing component 116, the radar tracker 118, and the output interface 120 are configured to process the radar returns 110-2 digitized by the MMIC 112 into various forms of other radar data, some of which is maintained for internal use by the radar system 104, such as a set of detections 122. Other forms of radar data are generated for use by other systems of the vehicle 102 (outside the radar system 104), such as a set of tracks 124 corresponding to objects tracked from the radar returns 110-2 for the field of view 106.

The processor 114 generates a two-dimensional representation of the received radar signals, which is indicative of a collection of responses or returns that can be used to compute object measurements related to the digitized radar returns 110-2 obtained from the MMIC 112 during one or more frame (e.g., scan of an antenna array). Based on the two-dimensional representation of the digitized radar returns 110-2 obtained from the MMIC 112, the processor 114 may perform peak finding. The signal processing component 116 may utilize the found peaks to generate the detections 122. A single detection or group of the detections 122 can indicate a range and radial range rate to effective radar returns 110-2 (e.g., scatters) on the object 108 in the environment 100. The detections 122 may have errors in position (e.g., azimuth angle), however, many of the detections 122, with accurate and high-quality range and range rates, can be used to support object measurements contained in the tracks 124. As such, detections 122 that contain more accurate data (e.g., range and range rate) may facilitate more accurate tracks 124.

Signal processing component 116 may analyze and determine data associated with detections. For example, a peak may be found within the two-dimensional representation of the digitized radar returns 110-2. In the frequency domain, peaks may be identified based on their location in the fast-time dimension (e.g., samples collected over a single chirp) and the slow-time dimension (e.g., samples collected over multiple chirps). Based on the identified frequencies in each of the respective domain, a two-dimensional system of equations may be created with respect to range and range rate. The system of equations may be solved by the signal processing component 116, and thus, determine range and range rate data associated with the found peaks. The signal processing component 116 determines data by compensating for the movement of the object within a single frame. In other words, the two-dimensional system of equation employed by the signal processing component 116 accounts not only for the movement of the object over multiple frames, but the movement of the object within a single frame that causes errors in range and range rate determination. As a result, the signal processing component 116 may determine a more accurate range and range rate associated with a peak of the two-dimensional representation.

Objects may be detected from an analysis of the detections 122. The detections 122 may be resolved through execution of the radar tracker 118 to generate the tracks 124. The radar tracker 118 may produce object data derived from the detections 122 (e.g., from grouping and analyzing the detections 122) using detection-based object recognition techniques. Some of the detections 122 (e.g., false detections, noise) may be filtered to reduce complexity/the amount of the detections 122 ultimately processed. For example, the detections 122 may be discarded by applying thresholding and/or by applying non-maximal suppression of the energy attributed to the detections, for example, by peak finding.

The output interface 120 resolves the internal tracks received from the radar tracker 118 to generate the tracks 124 that are output from the radar system 104. The radar tracker 118 may operate alone, or in combination with other types of trackers, such as a machine-learned model (e.g., neural network). Some of the tracks 124 may be defined, wholly or in part, by the detections 122. The tracks 124 define position, and other information about an object in the environment 100. The tracks 124 are updated as the radar system 104 captures the radar returns 110-2 over subsequent frames. In general, the output interface 120 causes each of the tracks 124 to include object-level information corresponding to an entire, radar-reflective object in the environment 100. Each of the tracks 124 may have a structure including numerous fields containing various properties estimated for that particular object. In aspects, the output interface 120 may provide the tracks 124 to a radar system 104 of the vehicle 102 to enable radar tracking that aids in performance of a vehicle function.

In aspects, the signal processing component 116 is capable of compensating the energy portions of the radar returns 110-2 for movement of the object 108 in the field of view 106. As a result, radar tracks 124 generated by the radar tracker 118 may be more accurate than radar tracks 124 that rely on radar data that has not been compensated for movement of the object 108 within a single frame. Moreover, the data output from the output interface 120 may enable more accurate radar data that better enables radar tracking within a vehicle function.

EXAMPLE VEHICLE CONFIGURATION

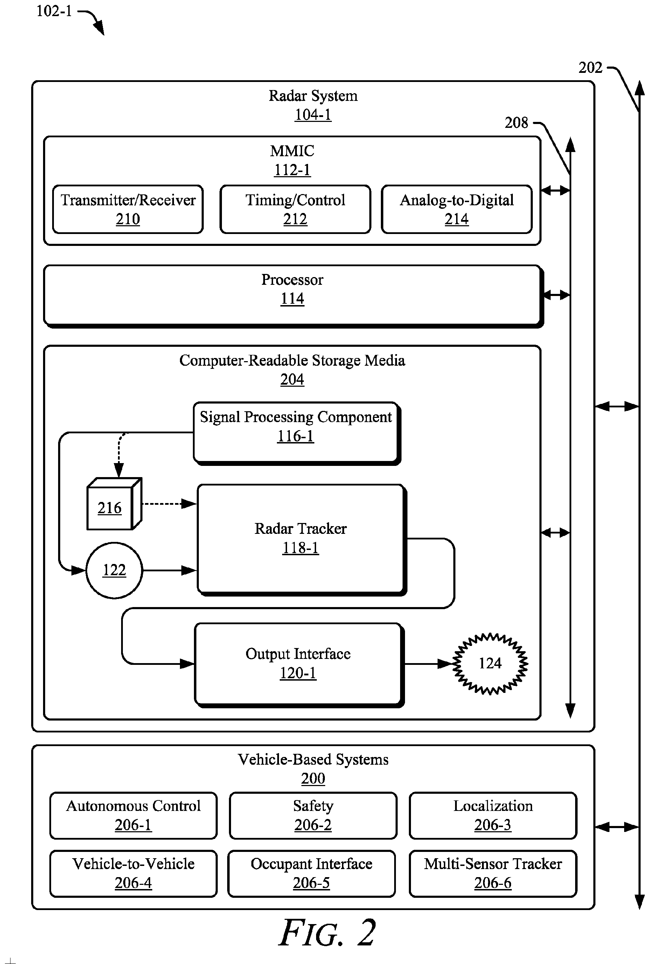

FIG. 2 illustrates an example vehicle 102-1 including a system configured to perform movement compensation for multi-dimensional radar signal processing. The vehicle 102-1 is an example of the vehicle 102.

Included in the vehicle 102-1 is a radar system 104-1, which is an example of the radar system 104, shown in greater detail. The vehicle 102-1 includes vehicle-based systems 200 that are operatively and/or communicatively coupled to the radar system 104-1 via link 202, which may be one or more wired and/or wireless links including vehicle-based network communications for interconnecting the components of the vehicle 102-1. In some examples, the link 202 is a vehicle communication bus.

The vehicle-based systems 200 use radar data provided on the link 202 by the radar system 104-1 to perform a particular function. For example, the set of tracks 124 can include information about movement of the object 108, such as a velocity and changes in position of the object 108 to enable the vehicle-based systems 200 to control the vehicle 102-1 to perform emergency braking, a lane change, or adjust a vehicle direction and/or speed. Examples of the vehicle-based systems 200 include systems for autonomous control 206-1, safety 206-2, localization 206-3, vehicle-to-vehicle 206-4 communication, occupant interface 206-5, and multi-sensor tracker 206-6. Other examples of the vehicle-based systems 200 are conceivable as including vehicle subsystems (e.g., components, circuits) thereof. The radar data that is output to the vehicle-based systems on the link 202 includes the tracks 124 generated by the output interface 120-1 (e.g., an example of output interface 120) of the radar system 104-1. The tracks 124 include object-level information corresponding to objects detected in the field-of-view 106, which upon receipt by the vehicle-based systems 200, can enable the vehicle 102-1 to drive safely by avoiding the object 108.

As one example, the autonomous control 206-1 provided by the vehicle-based systems 200 can use the set of tracks 124 received via the link 202 to autonomously or semi-autonomously control the vehicle 102-1 and safely drive on a road. The vehicle-based systems 200 may perform other functions performed in response to the set of tracks 124, which are not necessarily for vehicle control. For instance, the set of tracks 124 can be output to the occupant interface 206-5 to allow the operator or controller to act and avoid the objects. The set of tracks 124 may be provided to other vehicles using the vehicle-to-vehicle 206-4 communication, to allow operators or controllers of the other vehicles to also avoid the objects being tracked or have confidence that the vehicle 102-1 is aware of the presence of the other vehicles. By improving situational awareness, the vehicle 102-1 can drive in a safer manner to avoid the object 108 and other objects in the environment 100.

The radar system 104-1 includes a MMIC 112-1, as an example of the MMIC 112. The MMIC 112-1 includes transmitter/receiver elements 210, timing/control elements 212, and analog-to-digital converters 214. For simplicity in the Drawings, omitted from FIG. 2 is a MIMO antenna array that is also part of the radar system 104-1 and operatively coupled to the transmitter/receiver elements 210.

The transmitter/receiver elements 210 are configured to transmit EM signals as radar signals (e.g., the radar signals 110-1) and to receive reflected versions of the EM signals (e.g., the radar returns 110-2). In a MIMO example such as this, the transmitter/receiver elements 210 enable reception of the radar returns 110-2 with greater resolution than, for example, multistate radar. The transmitter/receiver element 210 includes one or more components for emitting, and one or more components for detecting, the EM signals. The transmitter/receiver elements 210 enable transmission of the radar signals 110-1 (e.g., electromagnetic signals) that radiate the field of view 106 and manage reception of the radar returns 110-2, many of which correspond to object reflections of the radar signals 110-1. The transmitter/receiver element 210 can be configured as a transceiver configured as a single component (e.g., chip) to perform both transmission and reception.

The timing/control elements 212 perform operations that adjust characteristics of the radar signals 110-1 (e.g., frequency, gain, phase, period) being transmitted, or operations to capture the radar returns 110-2 being reflected, in a way that is effective for radar tracking. For example, in accordance with existing MIMO techniques, the timing/control elements 212 cause the transmitter/receiver elements 210 to adjust a size, a shape, antenna pattern, or other characteristic of the radar system 104-1 to transmit the radar signals 110-1 to cause the radar returns 110-2 to capture high-resolution information about the environment 100.

The analogue-to-digital converters 214 convert the radar returns 110-2 obtained from the transmitter/receiver elements 210 into a digital form that can be used for generating data cubes, detections, and other radar processing. The MMIC 112-1 samples the signal at an appropriate sampling rate, for example, at least twice the frequency of the signal. The MMIC 112-1 outputs the digitized radar returns 110-2 over a link 208, which represents an internal communication link between components of the radar system 104-1. The link 208 may be wired or wireless and enables internal representations of radar data to be exchanged within the radar system 104-1 before appearing as the tracks 124 that are output on the link 202.

Operatively coupled to the MMIC 112-1 and the link 208, the radar system 104-1 also includes at least one processor 114-1, which is an example of the processor 114. Some examples of the processor 114-1 include, a controller, a control circuit, a microprocessor, a chip, a system, a system-on-chip, a device, a processing unit, a digital signal processing unit, a graphics processing unit, and a central processing unit. The processor 114-1 can be any component configured to process frames of digitized radar returns obtained from a MMIC to convey objects in the environment 100 based on information appearing in the tracks 124. The processor 114-1 may include multiple processors, one or more cores, embedded memory storing software or firmware, a cache or any other computer element that enables the processor 114-1 to execute machine-readable instructions for generating the tracks 124.

The machine-readable instructions that are executed by the processor 114-1 can be stored by a computer-readable media 204 (CRM 204) of the radar system 104-1. The CRM 204 may also be used to store data managed by the processor 114-1 during execution of the instructions. In some examples, the CRM 204 and the processor 114-1 are a single component, such as a system on chip including the CRM 204 configured as a dedicated memory for the processor 114-1. In some examples, access to the CRM 204 is shared by other components of the radar system 104-1 (e.g., the MMIC 112-1) that are connected to the CRM 204 (e.g., via the link 208). The processor 114-1 obtains instructions from the CRM 204 and execution of the instructions configure the processor 114-1 to perform radar operations, such as signal processing and radar tracking, which result in communication of the tracks 124 to the vehicle-based systems 200 and other components of the vehicle 102-1 over the link 202. In this example, the CRM 204 may include instructions for configuring the processor 114-1 to generate the data cube 216, generate the detections 122, and resolve the data cubes 216 and the detections 122 into the tracks 124. For example, the CRM 204 includes instructions for executing the signal processing component 116-1, which is an example of the signal processing component 116 that can output the detections 122 and/or the data cube 216. Also included in the CRM 204 are instruction sets, which when executed by the processor 114-1, implement a radar tracker 118-1 and an output interface 120-1, which, respectively, are examples of the radar tracker 118 and the output interface 120.

When executed by the processor 114-1, the signal processing component 116-1 receives a two-dimensional representation (Range-Doppler Plane) in the frequency domain of the digitized radar returns output by the MMIC 112-1. The signal processing component 116-1 may operate on a peak of the two-dimensional representation, for example, a peak found through peak searching. In doing so, the signal processing component 116-1 may utilize the frequency of the found peak in the fast-time dimension and the frequency of the found peak in the slow-time dimension to solve a two-dimensional system of equations with respect to the range and range rate associated with the found peak. In aspects, the signal processing component determines data more accurately due to the ability to compensate not only for the movement of an object (e.g., object 108) within multiple frames but by compensating for the movement of the object within a single frame. To this effect, the two-dimensional system of equations of the signal processing component 116-1 may adjust the frequency of the peak in the slow-time dimension and the frequency of the peak in the fast-time dimension to account for the movement of the object within a single frame. The signal processing component 116-1 may output this data in the form of the detections 122. In some cases, the output from the signal processing component 116-1 includes the detections 122 in addition to a data cube 216, or the output from the signal processing component 116-1 may convey the detections 122 as derivable from the data cube 216.

The radar tracker 118-1 may output tracks 124. The radar tracker 118-1 may act on the detections 122, the data cube 216, or both. In a specific implementation, the radar tracker 118 acts on the detections 122 by grouping, or clustering, the detections to detect objects. The object data may include informational data (e.g., range, range rate, azimuth) that can be used to generate the tracks 124. Tracks 124 may be generated based on any number of detections 122, including a single detection or the group of detections 122. Each of the tracks 124 may include object measurements that indicate information, such as position, movement, or other properties, of that object. By providing more accurate data from the signal processing component 116-1, the tracks 124 may be of greater accuracy and more reliable for performing actions of the vehicle-based systems 200.

The output interface 120-1 resolves the internal tracks received from the radar tracker 118-1 to generate the tracks 124 that are output from the radar system 104. The tracks 124 define position, and other information about an object in the environment 100. The tracks 124 are updated as the radar system 104 captures additional radar returns over multiple frames. In general, each of the tracks 124 includes object-level information corresponding to an entire, radar-reflective object in the environment 100. Each of the track 124 may have a structure including numerous fields containing various properties estimated for that particular object. The output interface 120-1 may provide the tracks 124 to any component of the vehicle 102-1 or the radar system 104-1, including any of the vehicle-based systems 200. While the detections 122 may be used in accordance with the described techniques to determine more accurate range or range rates, and more accurate positions or speeds, the data cube 216 can be analyzed for inferring other information, such as object shape, object size, object orientation, or object class.

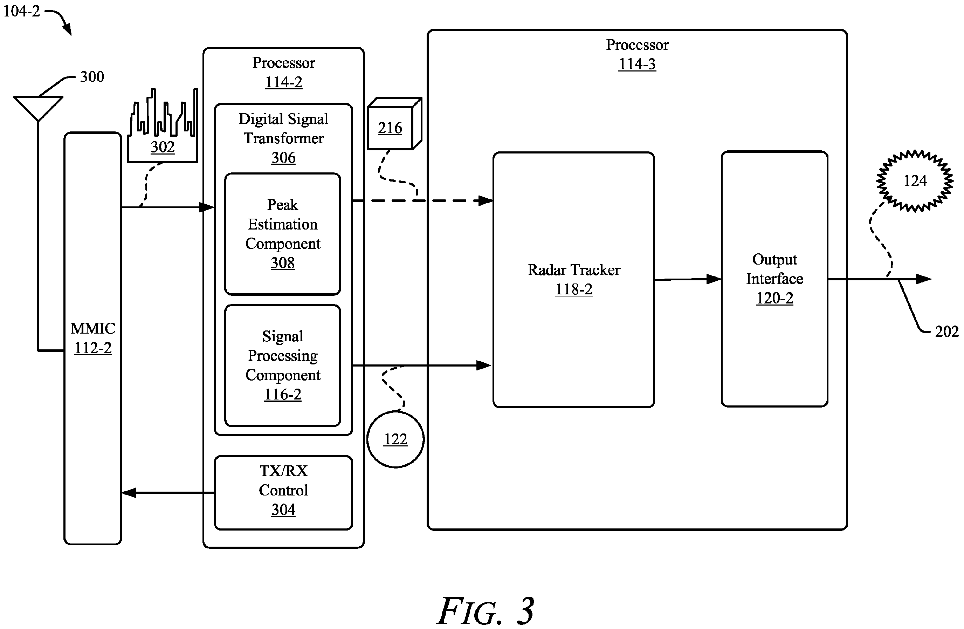

FIG. 3 illustrates an example radar system 104-2 including a system configured to perform movement compensation for multi-dimensional radar signal processing. The radar system 104-2 is an example of the radar system 104. The radar system 104-2 is illustrated as including a MMIC 112-2, an example of the MMIC 112. The MMIC 112-2 is connected to a receive antenna 300. Examples of a receive antenna may include a MIMO antenna array, although the movement compensation for multi-dimensional radar signal processing can be applied to any radar system. As a result, it should be appreciated that the receive antenna 300 may be any number of radar receive antenna.

The processor 114-2, an example of the processor 114, may execute the transmit/receive (TX/RX) control 304, which controls the transmission and reception operations of the MMIC 112-2. This may include generation of a waveform, digitizing, modulation, multiplexing, or any other transceiver operation. In aspects the TX/RX control 304 allows the antenna 300 to operate as a receive antenna or a transmit antenna. The radar receive antenna 300 collects samples of the received radar signals (e.g., radar returns 110-2). In aspects, the radar signals (e.g., radar signals 110-1) are transmitted as one or more frames (transmitted over time) each containing multiple chirps. A chirp may be represented as a single pulse sent at a particular frequency. The radar signals may reflect off of an object and the radar returns may include multiple chirps transmitted over one or more frames and received at the radar receive antenna 300. As the radar samples are collected over time, the MMIC 112-2 may process the received radar signals to create digitized receive signal 302 (e.g., digitized radar returns 110-2) using an analog-to-digital converter. The MMIC 112-2 may output the digitized receive signal 302 in the time domain, which results in energy associated with reflections from a single object (e.g., object 108) being represented at various time values.

Within the radar system 104-2 a digital signal transformer 306 may operate on a processor 114-2. The processor 114-2 is an example of the processor 114. The digital signal transformer 306 may input the digitized receive signal 302 and perform an FFT to convert the digitized receive signal 302 from the discrete time domain to the discrete frequency domain. In the frequency domain, a received radar signal reflected off of a single object will return signals with a same or similar frequency. As a result, the energy received from multiple samples of the multiple chirps sent over at least one frame can be collected and represented with respect to a fast frequency in the fast-time dimension (e.g., samples collected over a single chirp) and a slow frequency in the slow-time dimension (e.g., samples collected across multiple chirps). As described, the representation of the received radar signals is a two-dimensional representation with respect to the fast-time dimension and the slow-time dimension.

The digital signal transformer 306 may include additional elements to process the two-dimensional representation, for example, a peak estimation component 308. As illustrated the peak estimation component 308 is incorporated in the digital signal transformer 306. However, it should be appreciated that the peak estimation component 308 may be implemented separately from the digital signal transformer 306. Moreover, the digital signal transformer 306 may operate on a same or different processor than the peak estimation component 308. The peak estimation component 308 may search the two-dimensional representation for energy peaks to differentiate the radar reflections of objects from system noise in the field of view. Peak searching may be performed through a number of ways. The peak estimation component 308 may determine one or more energy peaks in the two-dimensional representation of the digitized receive signal 302 and provide the energy peaks to the signal processing component 116-2 for signal processing.

The signal processing component 116-2 is an example of the signal processing component 116. As illustrated the signal processing component 116-2 is incorporated in the digital signal transformer 306. However, it should be appreciated that the signal processing component 116-2 may be implemented separately from the digital signal transformer 306. Moreover, the digital signal transformer 306 may operate on a same or different processor than the signal processing component 116-2. The signal processing component 116-2 may act on the energy peak found by the peak estimation component 308. A fast frequency in the fast-time dimension and a slow frequency in the slow-time dimension may be determined for the energy peak by the signal processing component 116-2, or the peak estimation component 308, and used in a system of equations to determine data associated with the energy peak including a range and range rate.

The system of equations may account for the movement of the object within a single frame of the radar signals. For example, a system of equations may be utilized which includes two unknowns: range and range rate. The fast and slow frequencies (e.g., in the fast-time dimension and in the slow-time dimension) may be represented in terms of range and range rate. The fast frequencies in the fast-time dimension and slow frequencies in the slow-time dimension may be compensated for the movement of the object within a single frame. As a result, the range and range rate associated with the energy peak and determined from their combination, that is, determined from the two-dimensional system of equations may be a more accurate range and range rate.

The data, including range and range rate, associated with the energy peak may be output to a radar tracker 118-2. The radar tracker 118-2 is an example of the radar tracker 118. As illustrated, the radar tracker operates on a processor 114-3. It should be appreciated, however, that the radar system 104-2 may operate on a single processor or multiple processors. Therefore, while shown as implemented on the processor 114-3, the radar tracker 118-2 may be implemented on a same processor (e.g., processor 114-2 or any other processor) as other elements of the radar system 104-2 (e.g., the digital signal transformer 306 and the like).

In some implementations, the data associated with the energy peak is output in one of two ways: as a detection 122 or a data cube 216 from which the detections 122 are derivable. For example, the detections 122 may be output as a detection list including the range and range rate associated with the energy peak of each of the detections 122. As such, objects may be determined based on one or multiples of the detections 122. The detections 122 may be input to the radar tracker 118-2 where the range, range rate, and location of the object enables the radar tracker 118-2 to perform radar tracking. In an aspect, by providing more accurate range and range rate determinations through the signal processing component 116-2, the radar tracker 118-2 may perform more accurate radar tracking.

In another example, the data associated with the energy peak is included as part of the data cube 216. The radar tracker 118-2 may input the data cube 216 and perform object tracking based on information available within the data cube 216. The detections 122 can be derived from the data cube 216 and then techniques to account for movement of objects associated with the detections 122 is performed. The detections 122 and the data cube 216 may be used in combination enable radar tracking by the radar tracker 118-2.

The radar tracker 118-2 may perform radar tracking by generating the internal radar tracks based on the detections 122, the data cube 216, or both. The internal radar tracks may be output to an output interface 120-2. The output interface 120-2, as illustrated, is an example of the output interface 120. As with the radar tracker 118-2, it should be appreciated, that the radar system 104-2 may operate on a single processor or multiple processors. Therefore, while shown as implemented on the processor 114-3, the output interface 120-2 may be implemented on a same processor (e.g., processor 114-2 or any other processor) as other elements of the radar system 104-2 (e.g., the digital signal transformer 306 and the like). Moreover, though illustrated as operating on the processor 114-3, the output interface 120-2 may operate on another processor separate from the radar tracker 118-2.

The output interface 120-2 may resolve the internal radar tracks output from the radar tracker 118-2. For example, the output interface 120-2 may determine tracks 124 based on the internal tracks provided by the radar tracker 118-2 and output the tracks 124 along the link 202. In the case of the radar system implemented on a vehicle (e.g., vehicle 102) the link 202 may communicate with vehicle subsystem to provide the tracks 124 to be used to aid a vehicle function.

The radar tracker 118-2 and then the output interface 120-2 may update the tracks 124 as radar signals capture and process additional radar returns over multiple frames. The tracks 124 define position, and other information about an object external to the radar system 104-2. In some instances, the output interface 120-2 is referred to as a track filter or may incorporate a track filter function. When configured to execute a track filter function, the output interface 120-2 may include a measurement model, such as a nearly Coordinated-Turn Constant-Acceleration (CTCA) motion model, to model the dynamic behavior of the tracks 124 that are output from the radar tracker 118-2. Any other appropriate track filter motion model can be used by the output interface 120-2, such as Cartesian Constant Acceleration, or Coordinated Turn model, which may be paired with any appropriate track filter method such as Extended Kalman filter, Unscented Kalman filter, Probability Hypothesis Density (PHD) filter, Particle filter, or the like.

In this way, the radar system 104-2 outputs the set of highly accurate tracks 124 with reference to an object in a scene. The radar output may appear similar to outputs from other radar trackers, however, the tracks 124 output from the radar system 104-2 may be more accurate than tracks from these other trackers by way of using data (e.g., range and range rate) associated with energy peaks compensated for the movement of the object within a single frame. Moreover, the techniques do not require alteration of existing predictive models, instead offer plug-and-play enhancement with these and other radar software and hardware systems. Some other radar systems can be replaced by the radar system 104-2 to convey tracks more accurately 124 because of the more accurate data from the signal processing component 116-2. Improving accuracy and fidelity of a radar output in this way may improve operations of perception systems that rely on the radar output. In the case of an autonomous driving function or advanced safety feature of a vehicle (e.g., vehicle 102), the radar system 104-2 may be relied upon to safely maneuver the vehicle on a road. Driving decisions supported by the radar system 104-2 may result in safe and comfortable vehicle behavior, which may improve driving safety for many classes (e.g., low-cost, commercial, and luxury) of vehicles.

EXAMPLE METHOD

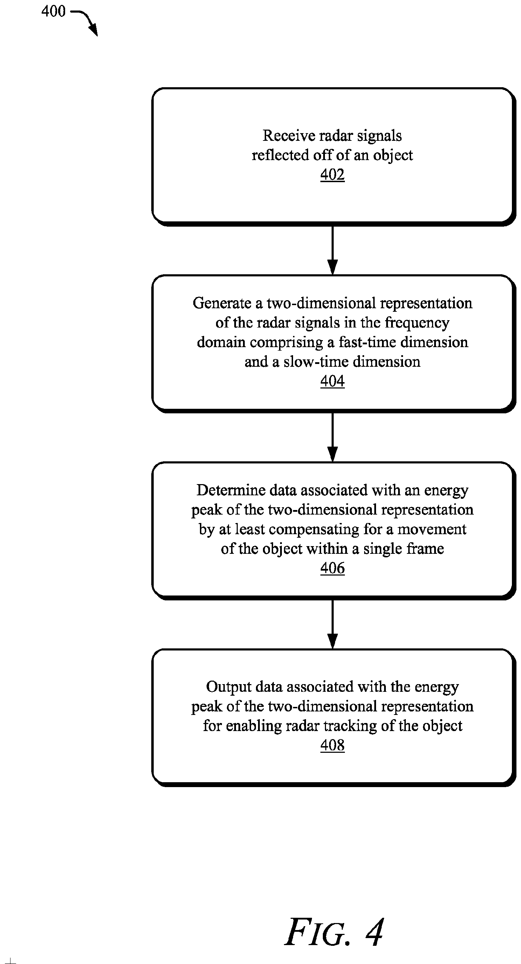

FIG. 4 illustrates an example method 400 for movement compensation for multi-dimensional radar signal processing. The operations (or steps) 402 through 408 are performed but are not necessarily limited to the order or combinations in which the operations are shown herein. Further, any of one or more of the operations may be repeated, combined, or reorganized to provide other operations. For ease of description, the method 400 is described with respect to the elements of FIG. 1.

At 402, radar returns 110-2 are received by the radar system 104 as radar signals 110-1 transmitted in a field of view 106 and reflected off of an object 108. The radar returns may be received by the radar system 104 at one or more radar sensors. In some implementations, the radar system 104 is implemented in a vehicle 102 as part of a perception system. In this implementation, the radar sensors may be located anywhere on the vehicle 102, for example, anywhere on the front, rear, sides, doors, mirrors, and the like. The radar signals 110-1 may be transmitted over multiple frames (e.g., over time) with each frame including multiple chirps (e.g., pulses). In aspects, this allows the radar returns 110-2 to be represented in a fast-time dimension (e.g., samples collected over a single chirp) and a slow-time dimension (e.g., samples collected across multiple chirps). When received by the radar system 104, the radar returns 110-2 are represented in the time domain. The one or more processors 114, perform various operations, including analog-to-digital conversion, to produce digitized radar returns 110-2. In some instances, the digitized radar returns 110-2 are generated by a MMIC 112. The digitized radar returns 110-2 are represented in the time domain, with energy associated with reflections off the object 108 spread across multiple times.

At 404, a two-dimensional representation of the radar signals is generated in the frequency domain, where reflections off the object 108 are represented at a single or similar frequency. The two-dimensional representation includes the radar returns 110-2 with respect to the fast-time dimension and the slow-time dimension. The digitized radar returns 110-2 are processed using the one or more processors 114 through a two-dimensional FFT. Alternatively, the digitized radar returns 110-2 may be processed through a DFT. In the frequency space, peak searching may be performed by the one or more processors 114 to determine energy peaks. In some implementations, the peak searching is performed to differentiate reflections off the object 108 from system noise. Energy peaks may be found and provided to a signal processing component 116 to determine data associated with the energy peak. In some implementations, multiple energy peaks are determined and provided to the signal processing component 116.

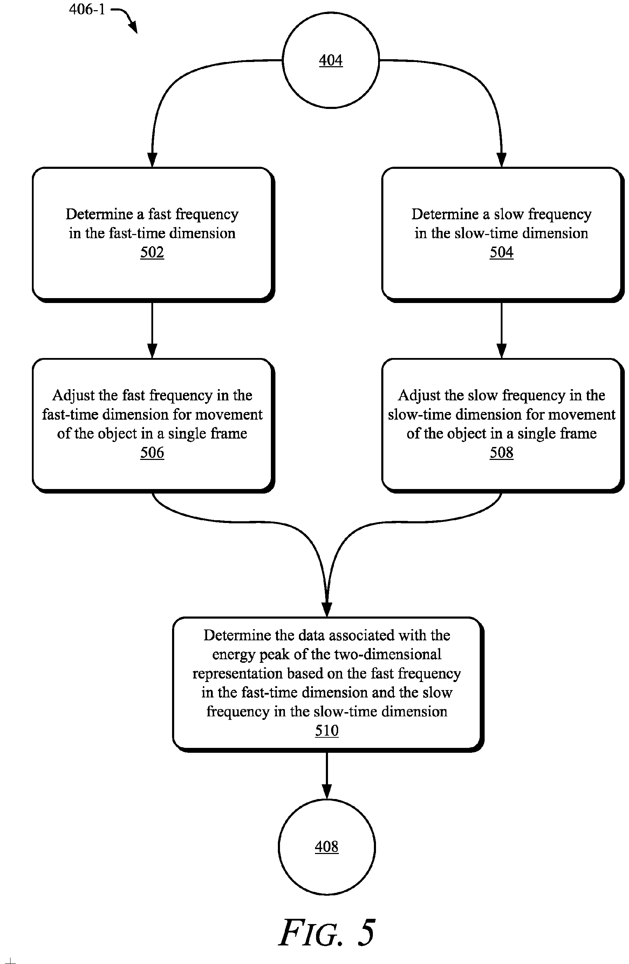

At 406, data associated with the energy peak is determined by the signal processing component 116. The data includes a range and range rate associated with the energy peak and compensated for the movement of the object 108 within a single frame. By compensating for the movement of the object within a single frame, the range and range rate determined may be a more accurate range and range rate. Greater detail of data determination through the signal processing component 116 is shown in FIG. 5.

At 408, the data associated with the energy peak of the two-dimensional representation is output to enable radar tracking of the object 108. In some implementations, the data associated with the energy peak is output as detections 122. The detections 122 may include information on the position and movement of the object 108. In other implementations, the data associated with the energy peak is included within a data cube output. The detections 122, the data cube, or both may be input to a radar tracker 118 to determine internal radar tracks. The internal radar tracks may be output to an output interface 120, which resolves the internal radar tracks and outputs tracks 124 for radar tracking. In some implementations, the tracks 124 are output to a vehicle subsystem of the vehicle 102 to aid in performing a vehicle function.

FIG. 5 illustrates a detailed example of step 406-1 for movement compensation for multi-dimensional radar signal processing. After generating the two-dimensional representation of the radar returns 110-2 at step 404, a fast frequency of the energy peak is determined in the fast-time dimension at 502. Additionally, at 504, a slow frequency of the energy peak is determined in the slow-time dimension. Using the frequency in the fast-time dimension and the frequency in the slow-time dimension, the signal processing component 116 may solve for range and range rate associated with the energy peak through a two-dimensional system of equations. However, the two-dimensional system of equations can be altered to account for movement of an object 108 within a single frame by adjusting the frequency in the fast-time dimension or the slow-time dimension based on the movement of the object 108 within a single frame.

At 506, the fast frequency in the fast-time dimension may be adjusted to compensate for the movement of the object 108 in a single frame. The frequency in the fast-time dimension may be adjusted by incorporating additional elements into the expression of the fast-time dimension frequency in terms of range and range rate. For example, the frequency in the fast-time dimension may be compensated by relating the frequency to range and range rate using the following equation.

$$F_{b_{fast-time}} = p^* \frac{f_s}{M} = -\left[f_{R_1} \cdot R + f_D \cdot v + \left(f_{R_1} \cdot a + f_{R_2}\right) \cdot \frac{K-1}{2} \cdot PRP \cdot v\right]$$

where,

$$f_{R_1} = \frac{2 \cdot S}{c}, \qquad f_{R_2} = \frac{2 \cdot \frac{\Delta f}{PRP}}{c}, \qquad f_D = \frac{2 \cdot f_0}{c}$$

$$a = \frac{\frac{\sum_{k=0}^{K-1} \frac{k \cdot f_0}{f_0 + k \cdot \Delta f}}{K}}{\frac{K-1}{2}}$$

In the equation above $f_{R1}$ represents the ranging frequency in the fast-time dimension ($F_{ft}$) where S is the slope rate of a single chirp and c is the speed of light. Similarly, $f_{R2}$ represents the ranging frequency in the slow-time dimension where $\Delta f$ is a step frequency (e.g., frequency difference) between chirps and *PRP* is the pulse repetition period (e.g., the time between the leading edge of the pulses) of the first chirp. The doppler shift (e.g., frequency shift) per unit range rate is represented as $f_D$ where $f_0$ is the starting frequency of the whole frame.

In the equation above, the frequency in the fast-time dimension is equal to the bin index in the fast-time dimension ($p^*$) multiplied by the ratio of the sampling rate ($f_s$) with respect to the number of samples per chirp (M). In some instances, the bin index in the fast-time dimension is equal to the average bin index of the multiple chirps. In terms of range ($R$) and range rate ($v$), the frequency in the fast-time dimension is based on the ranging frequency in the fast-time dimension and the doppler shift per unit range rate. To adjust the frequency in the fast-time dimension as shown above, the fast-time frequency may be expressed in terms of the range rate of the object within the single frame scaled by the ranging frequency in the fast-time dimension and the ranging frequency in the slow-time dimension. In some implementations, like the one shown above, fast-time frequency is adjusted based on a, which includes a ratio of the starting frequency of the whole frame to the start frequency and a change in frequency step of the multiple chirps. In aspects, and as illustrated, the fast-time frequency may be adjusted based on a number of chirps of the multiple chirps per frame (K) and the pulse repetition period of the first chirp.

At 508, the slow frequency in the slow-time dimension may be adjusted to compensate for the movement of the object 108 in a single frame. Similar to the fast-time frequency, the frequency in the slow-time dimension may be adjusted by incorporating additional elements into the expression of the slow-time dimension frequency in terms of range and range rate. For example, the frequency in the slow-time dimension may be compensated by relating the frequency in the slow-time dimension to range and range rate using the following equation.

$$F_{b_{slow-time}} = q^* \frac{\frac{1}{PRP}}{K} = -\left[f_{R_2} \cdot R + f_D' \cdot v + \left(f_{R_1} + f_{R_2}\right) \cdot \frac{M-1}{2} \cdot \frac{1}{f_s} \cdot v\right]$$

where,

$$f_D' = f_D - f_{R_1} \cdot a \cdot \frac{2 \cdot R}{c} = \frac{2}{c} \cdot \left(f_0 - S \cdot \frac{2 \cdot R}{c} \cdot a\right) \approx f_D,$$

In the equation above, all variables have the same meaning as in the range and range rate representation of the frequency in the fast-time dimension. Moreover, $f_D'$ is now the doppler shift per unit range rate. In some implementations, $f_D'$ is approximately $f_D$, and thus, $f_D'$ may be approximated as $f_D$.

In the equation above, the frequency in the slow-time dimension is equal to the bin index in the slow-time dimension ($q^*$) divided by the pulse repetition period scaled by the number of chirps of the multiple chirps per frame. To adjust the frequency in the slow-time dimension as shown above, the slow-time frequency may be expressed in terms of the range rate of the object within the single frame scaled by the ranging frequency in the fast-time dimension and the ranging frequency in the slow-time dimension. The frequency in the slow-time dimension may be adjusted based on the number of samples per chirp and the sampling rate of the multiple chirps.

The equations above provide an example of how to adjust the frequency of an energy peak in the fast-time and slow-time dimensions to account for movement of the object 108 within a single frame. It should be noted that implementations exist where only one of the two frequencies are compensated for movement of the object 108 within the single frame. Alternatively, both the frequency in the fast-time dimension and the frequency in the slow-time dimension may be compensated for movement of the object 108 within a single frame.

At 510, data associated with the energy peak is determined based on the fast frequency in the fast-time dimension and the slow frequency in the slow-time dimension. To determine the data, the signal processing component 116 may solve the system of equations to determine a range and range rate. In compensating for movement of the object, the range and range rate determined by the signal processing component 116 by solving the system of equations may be more accurate. Once the data associated with the energy peak is determined, the method may continue on to step 408.

## EXAMPLE RESULTS

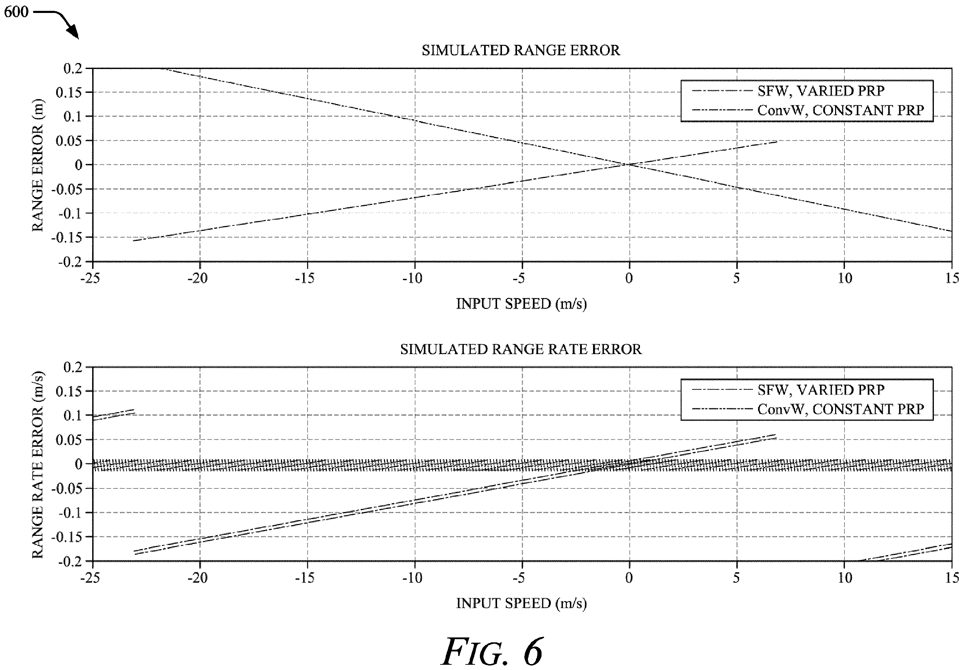

FIG. 6 illustrates example results 600 of two-dimensional signal processing for a radar system without movement compensation. The results 600 are simulated with respect to two cases: a case in which the pulse repetition period and the pulse frequency of each chirp is varied, and a case in which the pulse repetition period and the pulse frequency of each chirp is constant. The range and range rate errors are illustrated for object input speed (or range rate) ranging from -25 meters per second (m/s) to 15 m/s.

In the varied pulse repetition period case, the simulated range error spans from - 0.16 meters (m) to 0.05 m. Additionally, the simulated range rate error varies from -0.2 m/s to 0.11 m/s. In the constant pulse repetition period case, the simulated range error spans from -0.09 m to 0.2 m. Additionally, the simulated range rate error varies from -0.01 m/s to 0.01 m/s.

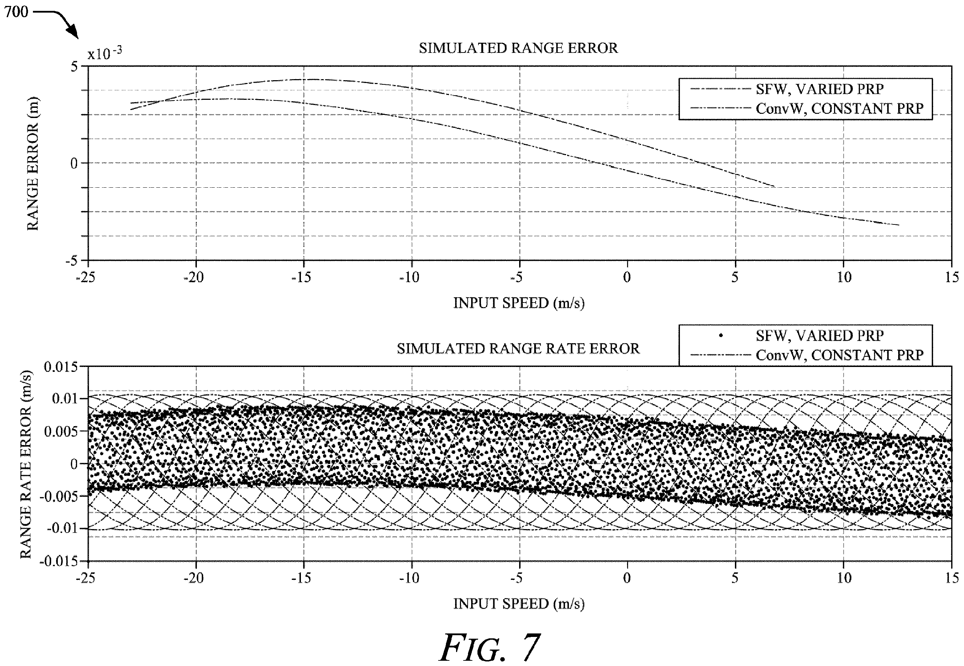

FIG. 7 illustrates example results 700 of movement compensation for multi-dimensional radar signal processing. Similar to the results 600, the results 700 are simulated with respect to two cases: a case in which the pulse repetition period and the pulse frequency of each chirp is varied, and a case in which the pulse repetition period and the pulse frequency of each chirp is constant. The range and range rate errors are illustrated for object input speed (or range rate) ranging from -25 meters per second (m/s) to 15 m/s.

In the varied pulse repetition period case, the simulated range error spans from - 0.001 m to 0.004 m. Compared to the results 600, the movement compensated two-dimensional signal processing of the results 700 have a range of range errors approximately 40 times smaller. Moreover, the maximum range error is approximately 40 times smaller in the results 700 compared to the results 600. Additionally, the simulated range rate error varies from -0.004 m/s to 0.007 m/s, a range almost 30 times smaller than the results 600. Further, the results 700 have a maximum range rate error almost 30 times smaller than the results 600. In the constant pulse repetition period case, the simulated range error spans from -0.003 m to 0.003 m. Additionally, the simulated range rate error varies from -0.01 m/s to 0.01 m/s.

As shown in the results 700, movement compensated two-dimensional signal processing in a radar system may determine range and range rate with a greater accuracy than traditional signal processing. As a result, the more accurate data may be provided to the radar system to enable more accurate radar tracking. More accurate radar tracking may improve accuracy and fidelity of a radar output, and thus, improve operations of perception systems that rely on the radar output. In the autonomous vehicle example, the perception system may assist in autonomous driving function or advanced safety feature of a vehicle through an advance driver-assistance system. Therefore, by improving the operations of the perception system through the use of accurate range and range rate determination, driving decisions supported by the radar system may result in safe and comfortable vehicle behavior, which may improve driving safety for the autonomous vehicle itself and surrounding vehicles, alike.

## ADDITIONAL EXAMPLES

Some additional examples are as follows.

Example 1. A method comprising: receiving radar signals comprising at least one frame of multiple chirps reflected off of an object external to a radar system; generating, in a frequency domain, a two-dimensional representation of the radar signals, the two-dimensional representation comprising a fast-time dimension and a slow-time dimension; determining data, including a range and a range rate, associated with an energy peak of the two-dimensional representation by at least compensating a portion of the data associated with the energy peak for movement of the object within a single frame of the at least one frame; and outputting the data associated with the energy peak including the compensated portion for enabling radar tracking of the object at the range and range rate included in the data.

Example 2. The method as recited by any previous example, wherein: determining the data associated with the energy peak of the two-dimensional representation is based on a fast frequency in the fast-time dimension and a slow frequency in the slow-time dimension; and compensating the data associated with the energy peak of the two-dimensional representation for the movement of the object within the single frame comprises: determining the fast frequency in the fast-time dimension; determining the slow frequency in the slow-time dimension; and adjusting, for the movement of the object within the single frame, the fast frequency in the fast-time dimension in addition to adjusting the slow frequency in the slow-time dimension.

Example 3. The method as recited by any previous example, wherein adjusting the fast frequency in the fast-time dimension and adjusting the slow frequency in the slow-time dimension each comprise: adjusting, based on the range rate included in the data for the single frame, the fast frequency in the fast-time dimension by scaling the fast frequency by a ranging frequency in the fast-time dimension; and adjusting, based on the range rate included in the data for the single frame, the slow frequency in the slow-time dimension by scaling the slow frequency by a ranging frequency in the slow-time dimension.

Example 4. The method as recited by any previous example, wherein the ranging frequency in the fast-time dimension is based on a slope rate of the multiple chirps and a speed of light.

Example 5. The method as recited by any previous example, wherein the ranging frequency in the slow-time dimension is based on a step frequency of the multiple chirps, a pulse repetition period of a first chirp of the multiple chirps, and a speed of light.

Example 6. The method as recited by any previous example, wherein adjusting the fast frequency in the fast-time dimension is further based on a number of chirps of the multiple chirps per frame and a pulse repetition period of a first chirp of the multiple chirps.

Example 7. The method as recited by any previous example, wherein adjusting the slow frequency in the slow-time dimension is further based on a number of samples per single chirp of the multiple chirps and a sampling frequency of the multiple chirps.

Example 8. The method as recited by any previous example, wherein adjusting the fast frequency in the fast-time dimension is further based on a ratio of a starting frequency of the single frame relative to the start frequency of the single frame and a step frequency of the multiple chirps.

Example 9. The method as recited by any previous example, further comprising: determining a data cube representative of the radar signals, the data cube including the data associated with the energy peak of the two-dimensional representation, wherein outputting the data associated with the energy peak comprises outputting the data cube for enabling radar tracking of the object.

Example 10. The method as recited by any previous example, wherein the outputting data associated with the energy peak of the two-dimensional representation comprises outputting a radar track to an object associated with the energy peak of the two-dimensional representation for enabling radar tracking of the object in performing a vehicle function.

Example 11. A system comprising: at least one processor; and at least one computer readable storage media that, when executed by the at least one processor, cause the at least one processor to: receive radar signals comprising at least one frame of multiple chirps reflected off of an object external to the system; generate, in a frequency domain, a two-dimensional representation of the radar signals, the two-dimensional representation comprising a fast-time dimension and a slow-time dimension; determine data, including a range and a range rate, associated with an energy peak of the two-dimensional representation by at least compensating a portion of the data associated with the energy peak for movement of the object within a single frame of the at least one frame; and output the data associated with the energy peak including the compensated portion for enabling radar tracking of the object at the range and range rate included in the data.

Example 12. The system as recited by any previous example, wherein: determining the data associated with the energy peak of the two-dimensional representation is based on a frequency in the fast-time dimension and a frequency in the slow-time dimension; and compensating the data associated with the energy peak of the two-dimensional representation for the movement of the object within the single frame comprises: determining the fast frequency in the fast-time dimension; determining the slow frequency in the slow-time dimension; and adjusting, for the movement of the object within the single frame, the fast frequency in the fast-time dimension in addition to adjusting the slow frequency in the slow-time dimension.

Example 13. The system as recited by any previous example, wherein the ranging frequency in the fast-time dimension is based on a slope of the multiple chirps and a speed of light.

Example 14. The system as recited by any previous example, wherein the ranging frequency in the slow-time dimension is based on a step frequency of the multiple chirps, and a pulse repetition period of a first chirp of the multiple chirps, and a speed of light.

Example 15. The system as recited by any previous example, wherein adjusting the fast frequency in the fast-time dimension is further based on a number of chirps of the multiple chirps per frame and a pulse repetition period of a first chirp of the multiple chirps.

Example 16. The system as recited by any previous example, wherein adjusting the slow frequency in the slow-time dimension is further based on a number of samples per single chirp of the multiple chirps per frame and a sampling frequency of the multiple chirps.

Example 17. The system as recited by any previous example, wherein adjusting the fast frequency in the fast-time dimension is further based on a ratio of a starting frequency of the single frame relative to the start frequency of the single frame and a step frequency of the multiple chirps.

Example 18. The system as recited by any previous example, wherein the at least one processor is further configured to: determine a data cube representative of the radar signals, the data cube including the data associated with the energy peak of the two-dimensional representation; and wherein outputting the data associated with the energy peak of the two-dimensional representation comprises outputting the data cube including the data associated with the energy peak of the two-dimensional representation for enabling radar tracking of the object in performing a vehicle function.

Example 19. The system as recited by any previous example, wherein the system comprises a radar system for a vehicle.

Example 20. The system as recited by any previous example, wherein the outputting the data associated with the peak of the two-dimensional representation comprises outputting, to a subsystem of the vehicle via a data bus, a radar track to an object associated with the energy peak of the two-dimensional representation for enabling radar tracking of the object in performing a vehicle function.

Example 21. A system comprising means for performing the method as recited by any previous example.

Example 22. A computer-readable storage medium comprising instructions that when executed by a processor cause a radar system to perform the method as recited by any previous example.


CONCLUSION

While various embodiments of the disclosure are described in the foregoing description and shown in the drawings, it is to be understood that this disclosure is not limited thereto but may be variously embodied to practice within the scope of the following claims. From the foregoing description, it will be apparent that various changes may be made without departing from the spirit and scope of the disclosure as defined by the following claims. Problems associated with two-dimensional radar signal processing that is uncompensated for movement can occur in other systems, not just vehicles or vehicle radar systems. Therefore, although described as a way to improve range and range rate determination in a radar system, the techniques of the foregoing description can be applied to other systems that collect and process sensor data in a multi-dimensional format for tracking moving objects while driving on a road.

The use of "or" and grammatically related terms indicates non-exclusive alternatives without limitation unless the context clearly dictates otherwise. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).


**Claims**

1. A method comprising:

   receiving radar signals comprising at least one frame of multiple chirps reflected off of an object external to a radar system;
   generating, in a frequency domain, a two-dimensional representation of the radar signals, the two-dimensional representation comprising a fast-time dimension and a slow-time dimension;
   determining data, including a range and a range rate, associated with an energy peak of the two-dimensional representation by at least compensating a portion of the data associated with the energy peak for movement of the object within a single frame of the at least one frame; and
   outputting the data associated with the energy peak including the compensated portion for enabling radar tracking of the object at the range and range rate included in the data.

2. The method of claim 1, wherein:

   determining the data associated with the energy peak of the two-dimensional representation is based on a fast frequency in the fast-time dimension and a slow frequency in the slow-time dimension; and
   compensating the data associated with the energy peak of the two-dimensional representation for the movement of the object within the single frame comprises:

determining the fast frequency in the fast-time dimension;
determining the slow frequency in the slow-time dimension; and
adjusting, for the movement of the object within the single frame, the fast frequency in the fast-time dimension in addition to adjusting the slow frequency in the slow-time dimension.

3. The method of claim 2, wherein adjusting the fast frequency in the fast-time dimension and adjusting the slow frequency in the slow-time dimension each comprise:

adjusting, based on the range rate included in the data for the single frame, the fast frequency in the fast-time dimension by scaling the fast frequency by a ranging frequency in the fast-time dimension; and
adjusting, based on the range rate included in the data for the single frame, the slow frequency in the slow-time dimension by scaling the slow frequency by a ranging frequency in the slow-time dimension.

4. The method of claim 3, wherein the ranging frequency in the fast-time dimension is based on a slope rate of the multiple chirps and a speed of light.

5. The method of claim 3 or 4, wherein the ranging frequency in the slow-time dimension is based on a step frequency of the multiple chirps, a pulse repetition period of a first chirp of the multiple chirps, and a speed of light.

6. The method of any one of claims 3 through 5, wherein adjusting the fast frequency in the fast-time dimension is further based on a number of chirps of the multiple chirps per frame and a pulse repetition period of a first chirp of the multiple chirps.

7. The method of any one of claims 3 through 6, wherein adjusting the slow frequency in the slow-time dimension is further based on a number of samples per single chirp of the multiple chirps and a sampling frequency of the multiple chirps.

8. The method of any one of claims 3 through 7, wherein adjusting the fast frequency in the fast-time dimension is further based on a ratio of a starting frequency of the single frame relative to the start frequency of the single frame and a step frequency of the multiple chirps.

9. The method of any one of the preceding claims, further comprising:

determining a data cube representative of the radar signals, the data cube including the data associated with the energy peak of the two-dimensional representation,
wherein outputting the data associated with the energy peak comprises outputting the data cube for enabling radar tracking of the object.

10. The method of any one of the preceding claims, wherein outputting data associated with the energy peak of the two-dimensional representation comprises outputting a radar track to an object associated with the energy peak of the two-dimensional representation for enabling radar tracking of the object in performing a vehicle function.

11. A system comprising:

at least one processor; and
at least one computer readable storage media that, when executed by the at least one processor, cause the at least one processor to perform the method of any one of the preceding claims.

12. The system of claim 11, wherein the system comprises a radar system for a vehicle.

100

108

106

110-1

110-2

104

Radar System
104

MMIC
112

Processor
114

Signal Processing Component
116

Radar Tracker
118

Output Interface
120

Detections
122

Tracks
124

102

*FIG. 1*

102-1

202

### Radar System
### 104-1

208

#### MMIC
#### 112-1

| Transmitter/Receiver 210 | Timing/Control 212 | Analog-to-Digital 214 |

#### Processor
#### 114

#### Computer-Readable Storage Media
#### 204

Signal Processing Component
116-1

216

Radar Tracker
118-1

122

Output Interface
120-1

124

### Vehicle-Based Systems
### 200

| Autonomous Control 206-1 | Safety 206-2 | Localization 206-3 |
| Vehicle-to-Vehicle 206-4 | Occupant Interface 206-5 | Multi-Sensor Tracker 206-6 |

*FIG. 2*

*FIG. 3*

EP 4 198 552 A1

400

Receive radar signals
reflected off of an object
402

Generate a two-dimensional representation
of the radar signals in the frequency
domain comprising a fast-time dimension
and a slow-time dimension
404

Determine data associated with an energy
peak of the two-dimensional representation
by at least compensating for a movement
of the object within a single frame
406

Output data associated with the energy
peak of the two-dimensional representation
for enabling radar tracking of the object
408

*FIG. 4*

406-1

( 404 )

Determine a fast frequency
in the fast-time dimension
502

Determine a slow frequency
in the slow-time dimension
504

Adjust the fast frequency in the
fast-time dimension for movement
of the object in a single frame
506

Adjust the slow frequency in the
slow-time dimension for movement
of the object in a single frame
508

Determine the data associated with the
energy peak of the two-dimensional
representation based on the fast frequency
in the fast-time dimension and the slow
frequency in the slow-time dimension
510

( 408 )

*FIG. 5*

SIMULATED RANGE ERROR

SFW, VARIED PRP
ConvW, CONSTANT PRP

RANGE ERROR (m)

INPUT SPEED (m/s)

SIMULATED RANGE RATE ERROR

SFW, VARIED PRP
ConvW, CONSTANT PRP

RANGE RATE ERROR (m/s)

INPUT SPEED (m/s)

600

*FIG. 6*

700

SIMULATED RANGE ERROR

FIG. 7

Europäisches
Patentamt
European
Patent Office
Office européen
des brevets

# EUROPEAN SEARCH REPORT

Application Number

EP 22 19 7738

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/158861 A1 (CATTLE BRYAN [US] ET AL) 21 May 2020 (2020-05-21) | 1,9-12 | INV.<br>G01S7/292 |
| Y | * paragraphs [0037], [0055], [0064], [0099], [0104] – [0118], [0169], [0170], [0182], [0183]; figures 1-4, 9 * | 2-8 | G01S7/35<br>G01S13/72<br>G01S13/931 |
| | ----- | | |
| X | CN 111 505 618 A (UNIV SOUTHEAST) 7 August 2020 (2020-08-07) | 1-12 | |
| Y | * paragraphs [0003] – [0158]; figures 1-4 * | 2-8 | |
| | ----- | | |
| X | CN 109 946 659 A (UNIV SOUTHEAST) 28 June 2019 (2019-06-28) | 1-12 | |
| | * paragraphs [0003] – [0052]; figures 1-4 * | | |
| | ----- | | |

TECHNICAL FIELDS
SEARCHED        (IPC)

G01S

The present search report has been drawn up for all claims

| Place of search | Date of completion of the search | Examiner |
|---|---|---|
| Munich | 14 April 2023 | Schmelz, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..........................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 22 19 7738**

This annex lists the patent family members relating to the patent documents cited in the above-mentioned European search report.
The members are as contained in the European Patent Office EDP file on
The European Patent Office is in no way liable for these particulars which are merely given for the purpose of information.

**14-04-2023**

| Patent document cited in search report | | Publication date | Patent family member(s) | | Publication date |
|---|---|---|---|---|---|
| US 2020158861 | A1 | 21-05-2020 | CA 3120294 A1 | | 28-05-2020 |
| | | | CN 113661412 A | | 16-11-2021 |
| | | | EP 3884297 A2 | | 29-09-2021 |
| | | | IL 283284 A | | 29-07-2021 |
| | | | JP 2022507777 A | | 18-01-2022 |
| | | | KR 20210093967 A | | 28-07-2021 |
| | | | US 2020158861 A1 | | 21-05-2020 |
| | | | US 2023059523 A1 | | 23-02-2023 |
| | | | WO 2020106849 A2 | | 28-05-2020 |
| CN 111505618 | A | 07-08-2020 | NONE | | |
| CN 109946659 | A | 28-06-2019 | NONE | | |

EPO FORM P0459

For more details about this annex : see Official Journal of the European Patent Office, No. 12/82